# EUROPÄISCHE PATENTSCHRIFT

(11) **EP 3 880 535 B1**
(45) Veröffentlichungstag und Bekanntmachung des Hinweises auf die Patenterteilung: **11.10.2023**
(21) Anmeldenummer: 19829479.5
(22) Anmeldetag: 16.12.2019
(51) Int. Cl.: B61D 27/00, B60H 1/00, B60H 1/24

(54) **KLIMATISIERUNGSANORDNUNG FÜR EIN SCHIENENFAHRZEUG**
AIR-CONDITIONING ASSEMBLY FOR A RAIL VEHICLE
ENSEMBLE DE CLIMATISATION POUR UN VÉHICULE FERROVIAIRE

(30) Priorität: 15.01.2019 DE 102019200381
(43) Veröffentlichungstag der Anmeldung: 22.09.2021
(73) Patentinhaber: Siemens Mobility GmbH, 81739 München (DE)
(72) Erfinder: KASAP, Irfan, 44653 Herne (DE); PELZNER, Matthias, 51381 Leverkusen (DE); SCHMITZ, Markus, 52249 Eschweiler (DE)
(74) Vertreter: Siemens Patent Attorneys
(86) Internationale Anmeldenummer: PCT/EP2019/085227
(87) Internationale Veröffentlichungsnummer: WO 2020/148044

(56) Entgegenhaltungen:
- CN-A- 106 274 942
- DE-B1- 2 634 712

## Beschreibung

Die Erfindung bezieht sich auf eine Klimatisierungsanordnung für einen Wagen eines Schienenfahrzeugs nach dem Oberbegriff von Anspruch 1.

Danach umfasst eine solche Klimatisierungsanordnung, die beispielsweise aus der CN 106 274 942 A bekannt ist, ein auf dem Dach des Schienenfahrzeugs angeordnetes Klimagerät, eine an eine Unterseite des Klimagerätes angeschlossene und an ihrer Oberseite eine Zulufteinlassöffnung aufweisende Luftverteilbox, beidseitig jeweils in Längsrichtung des Wagens von der Luftverteilbox ausgehende Hauptklimakanäle und eine innerhalb der Luftverteilbox angeordnete Umlenkeinrichtung zur Verteilung der von dem Klimagerät kommenden Zuluft auf die Hauptklimakanäle, wobei ein Grundkörper der Umlenkeinrichtung in einem Längsschnitt der Hauptklimakanäle keilförmig ausgebildet ist, wobei eine oberste Kante des Grundkörpers der Umlenkeinrichtung der Zulufteinlassöffnung zugewandt ist, während Fußbereiche des Grundkörpers der Umlenkeinrichtung von ihrem Höhenniveau her an Böden der Hauptklimakanäle anschließen, und die Umlenkeinrichtung innerhalb der Luftverteilbox in Längsrichtung der Hauptklimakanäle beidseitig aus einer Mittellage heraus verschieblich angeordnet ist.

Zudem ist aus der DE 26 34 712 B1 ein Luftführungskanal zur Beheizung und/ oder Belüftung des Innenraums von Kraftfahrzeugen, insbesondere Omnibussen, bekannt, bei dem eine Anordnung von Luftleitschaufeln zur Umlenkung von Zuluft eingesetzt wird.

Die Klimatisierung eines Schienenfahrzeugwagens kann mit Hilfe eines Kompaktklimagerätes erfolgen, das sich, in Fahrzeuglängsrichtung gesehen, mittig auf einem Wagendach oder auch an einem Wagenende befinden kann. Dabei wird hinsichtlich Temperatur und Feuchtigkeit konfektionierte Zuluft, die von dem Kompaktklimagerät bereitgestellt wird, durch eine Öffnung in dem Dach hindurchgeführt und mit Hilfe einer Luftverteilbox auf unterhalb des Daches in Längsrichtung des Fahrzeugs verlaufende Hauptklimageräte verteilt. Wenn sich beispielsweise das Kompaktklimagerät bezogen auf die Längsrichtung des Wagens mittig auf dem Dach befindet, ist es erforderlich, die konfektionierte Zuluft von dem Kompaktklimagerät etwa gleichverteilt auf zwei in entgegengesetzte Richtungen längs des Wagens abgehende Hauptklimakanäle zu verteilen. Dies erfolgt mit einer geeignet ausgebildeten Umlenkeinrichtung, die sich in der Luftverteilbox befindet.

Diese gewünschte Luftverteilung wird jedoch in vielen Anwendungsfällen dadurch erschwert, dass die einkommende Zuluft vor Durchtritt des Wagendaches in einem Winkel von ca. 90 Grad umgelenkt werden muss und deshalb an einer Austrittsseite des Kompaktklimageräts keine homogene Luftströmung vorliegt. Für eine bedarfsgerechte Lastverteilung, insbesondere auch Gleichverteilung der Luftströmungen auf die beiden Hauptklimakanäle, die an die Luftverteilbox angeschlossen sind, ist es daher erforderlich, ergänzende Maßnahmen zu treffen.

Ausgehend hiervon liegt der Erfindung die Aufgabe zugrunde, eine Klimatisierungsanordnung der eingangs genannten Art derart weiterzuentwickeln, dass eine annähernde Gleichverteilung der einströmenden Zuluft mittels der Luftverteilbox auf die Hauptklimakanäle ermöglichen lässt.

Diese Aufgabe wird gelöst durch die Merkmale des Anspruchs 1.

Danach ist vorgesehen, dass ein Grundkörper der Umlenkeinrichtung in einem Längsschnitt der Hauptklimakanäle keilförmig ausgebildet ist, wobei eine oberste Kante des Grundkörpers der Umlenkeinrichtung der Zulufteinlassöffnung zugewandt ist, während Fußbereiche des Grundkörpers der Umlenkeinrichtung von ihrem Höhenniveau her an Böden der Hauptklimakanäle anschließen, und die Umlenkeinrichtung innerhalb der Luftverteilbox in Längsrichtung der Hauptklimakanäle beidseitig aus einer Mittellage heraus verschieblich angeordnet ist.

Der keilförmig ausgebildete Grundkörper der Umlenkeinrichtung bewirkt somit, dass vertikal von oben einströmende Zuluft um ca. 90 Grad umgelenkt und auf die gegenläufig angeordneten Hauptklimakanäle verteilt werden kann. Um der Tatsache Rechnung zu tragen, dass die Zuluft, die über die Zulufteinlassöffnung der Luftverteilbox einströmt, im horizontalen Querschnitt der Luftverteilbox ungleichmäßig ist, ist es vorgesehen, dass die Umlenkeinrichtung innerhalb der Luftverteilbox in Längsrichtung der Hauptklimakanäle beidseitig aus einer Mittellage heraus verschieblich angeordnet ist. In dieser Weise lässt sich eine über den gesamten Querschnitt ungleichmäßig verteilte Strömungsdichte derart ausgleichen, dass die beiden, an die Luftverteilbox angeschlossenen Hauptklimakanäle annähernd eine übereinstimmende Strömungsdichte aufweisen oder auch eine andere bedarfsgerechte Lastverteilung auf die beiden Hauptklimakanäle verwirklicht wird. Beispielsweise kann in Versuchen eine geeignete Längsposition zur Anordnung der Umlenkeinrichtung gefunden werden, der zu dem gewünschten Luftverteilungsergebnis führt.

Zur Realisierung der Verschieblichkeit der Umlenkeinrichtung ist es möglich, einen Boden der Luftverteilbox mit Langlöchern auszustatten, die sich parallel zu den Hauptklimakanälen erstrecken. Mit Hilfe von beispielsweise Schrauben kann dann die Umlenkeinrichtung an einer gewünschten Position fixiert werden.

Zur Verbesserung der Effektivität der Umlenkeinrichtung ist vorgesehen, dass die Umlenkeinrichtung einen Steg aufweist, der sich von der obersten Kante des Grundkörpers der Umlenkeinrichtung in Richtung auf die Zulufteinlassöffnung der Luftverteilbox erstreckt. Dadurch ragt der Steg ein Stück weit in Richtung der Lufteinlassöffnung, so dass die Wirksamkeit der Umlenkeinrichtung im Hinblick auf ihre Beeinflussung der beiden Strömungszweige zu den beiden Hauptklimakanälen verbessert wird.

Ein vertikaler Abstand der Oberkante des Stegs zu der Zulufteinlassöffnung der Luftverteilbox kann weniger als 10 % des vertikalen Abstands zwischen einem Boden der Luftverteilbox zu der Zulufteinlassöffnung der Luftverteilbox betragen. Für diesen Fall ergibt sich eine besonders günstige Wirksamkeit des Steges zur Beeinflussung der Zuluftströmungen in Richtung auf die beiden gegenläufigen Hauptklimakanäle.

Insbesondere kann eine Oberkante des Stegs unmittelbar an die Zulufteingangsöffnung der Luftverteilbox angrenzen. Es ist auch möglich, dass die Oberkante des Stegs durch die Zulufteingangsöffnung der Luftverteilbox hindurchragt und noch weiter stromaufwärts in die Zuluftverteilung eingreift.

Die Umlenkeinrichtung kann spiegelsymmetrisch bezüglich einer Vertikalebene ausgebildet sein, welche die oberste Kante des Grundkörpers der Umlenkeinrichtung enthält. Dies sorgt für gleiche Umlenkverhältnisse für beide Hauptklimakanäle.

Die oberste Kante des Grundkörpers der Umlenkeinrichtung kann unmittelbar oberhalb eines Höhenniveaus von Oberseiten der Hauptklimakanäle liegen. Dies hat den Vorteil, dass eine Umlenkung der Zuluftströmungen unmittelbar im Höhenbereich der Hauptklimakanäle erfolgt. Gegen eine weitere vertikale Erstreckung des Grundkörpers der Umlenkeinrichtung nach oben spricht auch, dass sich schwierigere Druckverhältnisse aufgrund eines zunehmenden Strömungswiderstandes ergeben können.

Die Luftverteilbox kann einen unteren, an die Hauptluftkanäle angeschlossenen und an deren Höhe angepassten Gehäuseabschnitt und einen zwischen diesem Gehäuseabschnitt und einem mit der Zulufteingangsöffnung der Luftverteilbox korrespondierende Zuluftausgangsöffnung des Klimagerätes gesetzten Adapterabschnitt aufweisen. Dabei kann der Adapterabschnitt, an dessen Oberseite sich dann die Zulufteingangsöffnung befindet, an einem Rohbau des Wagens in dessen Dachbereich montiert sein und somit auch zur Halterung der Luftverteilbox dienen. Insbesondere kann sich der Grundkörper der Umlenkeinrichtung überwiegend innerhalb des Gehäuseabschnitts befinden, während sich der oben näher beschriebene Steg überwiegend vertikal durch den Adapterabschnitt hindurch erstreckt.

Ein Ausführungsbeispiel der Erfindung wird nachfolgend unter Bezugnahme auf die Zeichnung noch näher erläutert. Es zeigen:
- Figur 1: eine perspektivische Ansicht auf einen dachseitigen Teil einer Klimatisierungsanordnung für den Wagen eines Schienenfahrzeugs,
- Figur 2: eine Längsschnittansicht des Teils der Klimatisierungsanordnung von Figur 1 und
- Figur 3: eine perspektivische Ansicht einer Umlenkeinrichtung des Teils der Klimatisierungsanordnung von Figur 1 mit angrenzenden Hauptklimakanälen.

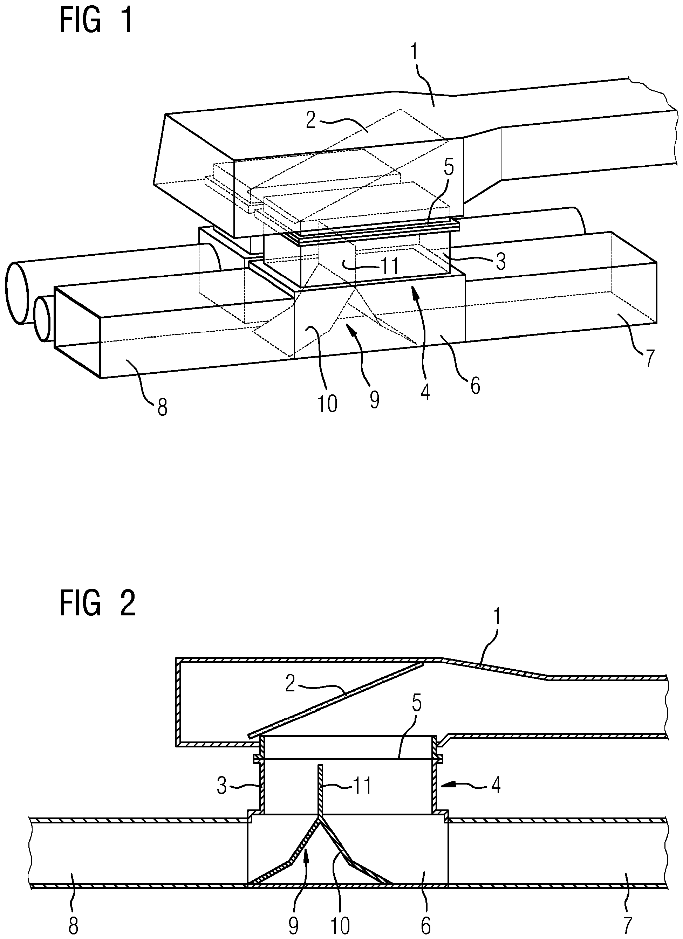

Figur 1 zeigt einen dachseitigen Teil einer Klimatisierungsanordnung für einen Wagen eines Schienenfahrzeugs. Ein auf einem Dach des Wagens montiertes Kompaktklimagerät 1 dient zur Konditionierung von Zuluft für einen Fahrgastinnenraum des Schienenfahrzeugs, das zu Personenbeförderungszwecken vorgesehen ist. In einem Auslassabschnitt des Kompaktklimageräts 1 ist ein Umlenkblech 2 vorgesehen, welches innerhalb des Kompaktklimagerätes 1 horizontal anströmende konditionierte Zuluft in etwa einem 90°-Winkel nach unten durch eine Dachöffnung hindurch umleitet, und zwar in einen innerhalb der Dachöffnung angeordneten Adapterabschnitt 3 einer Luftverteilbox 4. Der rohbauseitig befestigte Adapterabschnitt 3 weist auf seiner Oberseite eine Zulufteingangsöffnung 5 auf und ist an der Unterseite des Klimakompaktgeräts 1 angeflanscht. Die Luftverteilbox 4 wird vervollständigt durch einen unteren Gehäuseabschnitt 6, von dem aus zwei gegenläufige Hauptklimakanäle 7, 8 ausgehen, die sich jeweils in Längsrichtung des Schienenfahrzeugwagens erstrecken.

Nach Passieren der Zulufteinlassöffnung 5 gelangt die konditionierte Zuluft in den Wirkungsbereich einer Umlenkeinrichtung 9 mit einem im Querschnitt keilförmigen Grundkörper 10 und einen sich von der obersten Kante des Grundkörpers 10 vertikal nach oben erstreckenden Steg 11.

Der keilförmige Grundkörper 10 weist Fußbereiche auf, die von ihrem Höhenniveau her an Böden der Hauptklimakanäle 7, 8 angepasst ist, so dass sich eine möglichst ungehinderte Zuluftströmung von der Umlenkeinrichtung 9 aus in Richtung auf die jeweiligen Hauptklimakanäle 7, 8 ergibt. Die Umlenkeinrichtung 9 bewirkt, dass beispielsweise die über die Zulufteinlassöffnung 5 eintretende Zuluft etwa gleich verteilt in die beiden Hauptklimakanäle 7, 8 eingeleitet wird.

Zu diesem Zweck ist die Umlenkeinrichtung 9 in Längsrichtung der Hauptklimakanäle 7, 8 verschieblich. Ausgehend von einer Mittellage kann die Umlenkeinrichtung 9 sowohl in Richtung auf den Hauptklimakanal 7 als auch in Richtung auf den Hauptklimakanal 8 verschoben werden.

Im vorliegenden Ausführungsbeispiel würde die aus dem Kompaktklimagerät 1 anströmende Zuluft durch die Einwirkung des Umlenkbleches 2 ohne Einwirkung der Umlenkeinrichtung 9 hauptsächlich in den Hauptklimakanal 8 strömen, da die Zuluft mehr Geschwindigkeitskomponenten in dieser Richtung hat als in Fließrichtung des Hauptklimakanals 7. Daher ist in Figur 2 die Umlenkeinrichtung 9 ein Stück weit in Richtung des Hauptklimakanals 8 verschoben, so dass sich eine annähernde Gleichverteilung der Zuluft auf die beiden Hauptklimakanäle 7, 8 ergibt.

Der Steg 11 ist fest mit dem keilförmigen Grundkörper 10 der Umlenkeinrichtung 9 verbunden. Ein Boden 12 des Gehäuseabschnitts 6 der Luftverteilbox 4 ist zur Montage der Umlenkeinrichtung 9 mit mindestens einem Langloch 13 ausgestattet, das sich in Längsrichtung der Hauptklimakanäle 7, 8 erstreckt. Mit Hilfe mindestens einer Verstellschraube 14, die durch den Boden 12 und das Langloch 13 hindurchgeführt sowie mittels einer Mutter fixiert ist, kann sodann die Umlenkeinrichtung 9 an gewünschter Position am Boden 12 des Gehäuseabschnitts 6 der Luftverteilbox 4 befestigt werden.

Der Grundkörper 10 der Umlenkeinrichtung 9 ist in seiner Höhe an die Höhe der Oberseite der Hauptklimakanäle 7, 8 angepasst und reicht bis zu einem Schnittstellenbereich zwischen dem Gehäuseabschnitt 6 und dem Adapterabschnitt 3 der Luftverteilbox 4. Der Steg 11 der Umlenkeinrichtung 9 erstreckt sich wiederum von der Schnittstelle zwischen dem Gehäuseabschnitt 6 und dem Adapterabschnitt 3 aus vertikal in Richtung auf die Zulufteinlassöffnung 5 und grenzt unmittelbar an diese Zulufteinlassöffnung 5 an. Es ist hervorzuheben, dass der Steg 11 auch bei geringer bemessener vertikaler Erstreckung vorteilhafte Wirkungen zur geeigneten Verteilung der anströmenden Zuluft auf die beiden Hauptklimakanäle 7, 8 zeigt. Die im konkreten Ausführungsbeispiel nach Figur 2 gezeigte Dimensionierung des Steges 11 wird als besonders bevorzugt angesehen.

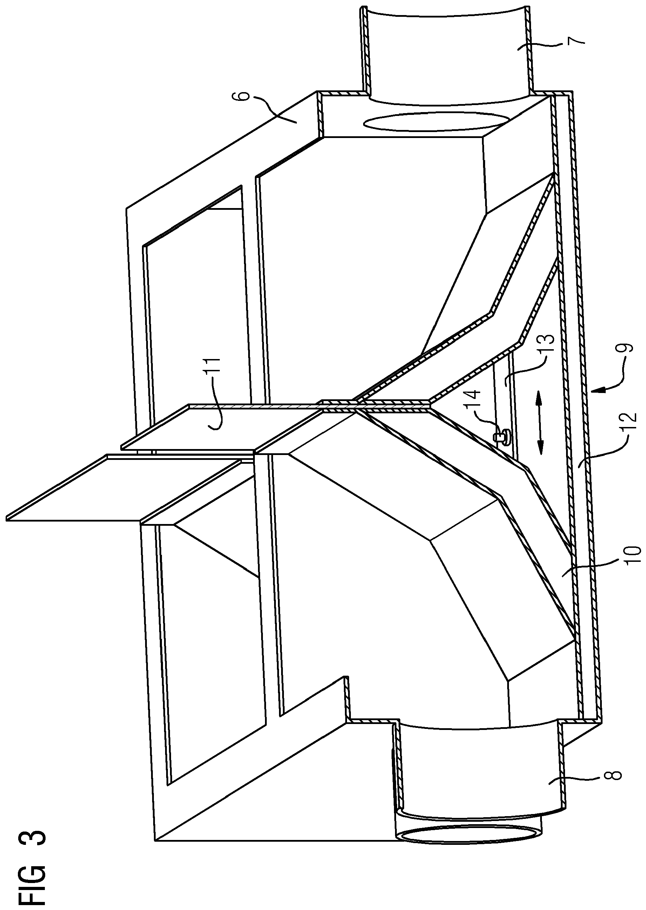

Figur 3 zeigt die Umlenkeinrichtung 9 noch mehr im Detail. Es ist ersichtlich, dass der Grundkörper 10 spiegelsymmetrisch zu einer Ebene verläuft, die den Steg 11 enthält. Zudem ist der Grundkörper 10 hinsichtlich seiner der Zuluftströmung zugewandten Seite aus zwei in einem Winkel zueinanderstehenden Flächen zusammengesetzt. Die Fußbereiche des Grundkörpers 10 laufen spitz zu und schließen in ihrer Höhe unmittelbar an Oberseiten der Böden der Hauptklimakanäle 7, 8 an.

## Patentansprüche

1. Klimatisierungsanordnung für einen Wagen eines Schienenfahrzeugs, mit einem auf einem Dach des Schienenfahrzeugs anordnenbaren Klimagerät (1), einer an eine Unterseite des Klimageräts angeschlossenen und an ihrer Oberseite eine Zulufteinlassöffnung (5) aufweisenden Luftverteilbox (4), beidseitig jeweils in Längsrichtung des Wagens von der Luftverteilbox (4) ausgehenden Hauptklimakanälen (7, 8) und einer innerhalb der Luftverteilbox (4) angeordneten Umlenkeinrichtung (9) zur Verteilung der von dem Klimagerät (1) kommenden Zuluft auf die Hauptklimakanäle (7, 8),
wobei
ein Grundkörper (10) der Umlenkeinrichtung (9) in einem Längsschnitt der Hauptklimakanäle (7, 8) keilförmig ausgebildet ist, wobei eine oberste Kante des Grundkörpers der Umlenkeinrichtung (9) der Zulufteinlassöffnung (5) zugewandt ist, während Fußbereiche des Grundkörpers (10) der Umlenkeinrichtung (9) von ihrem Höhenniveau her an Böden der Hauptklimakanäle (7, 8) anschließen, und die Umlenkeinrichtung (9) innerhalb der Luftverteilbox (4) in Längsrichtung der Hauptklimakanäle (7, 8) beidseitig aus einer Mittellage heraus verschieblich angeordnet ist,
**dadurch gekennzeichnet, dass**
die Umlenkeinrichtung (9) einen Steg (11) aufweist, der sich von der obersten Kante des Grundkörpers (10) der Umlenkeinrichtung (9) in Richtung auf die Zulufteinlassöffnung (5) der Luftverteilbox (4) erstreckt.

2. Klimatisierungsanordnung nach Anspruch 1,
**dadurch gekennzeichnet, dass**
ein vertikaler Abstand der Oberkante des Stegs (11) zu der Zulufteinlassöffnung (5) der Luftverteilbox (4) weniger als 10% des vertikalen Abstands zwischen einem Boden der Luftverteilbox (4) zu der Zulufteinlassöffnung (5) der Luftverteilbox beträgt.

3. Klimatisierungsanordnung nach Anspruch 1 oder 2,
**dadurch gekennzeichnet, dass**
eine Oberkante des Stegs (11) unmittelbar an die Zulufteingangsöffnung (5) der Luftverteilbox (4) angrenzt.

4. Klimatisierungsanordnung nach einem der Ansprüche 1 bis 3,
**dadurch gekennzeichnet, dass**
die Umlenkeinrichtung (9) spiegelsymmetrisch bezüglich einer Vertikalebene ausgebildet ist, welche die oberste Kante des Grundkörpers (10) der Umlenkeinrichtung (9) enthält.

5. Klimatisierungsanordnung nach einem der Ansprüche 1 bis 4,
**dadurch gekennzeichnet, dass**
die oberste Kante des Grundkörpers (10) der Umlenkeinrichtung (9) unmittelbar oberhalb eines Höhenniveaus von Oberseiten der Hauptklimakanäle liegt.

6. Klimatisierungsanordnung nach einem der Ansprüche 1 bis 5,
**dadurch gekennzeichnet, dass**
die Luftverteilbox (4) einen unteren, an die Hauptluftkanäle (7, 8) angeschlossenen und an deren Höhe angepassten Gehäuseabschnitt (6) und einen zwischen diesen Gehäuseabschnitt (6) und eine mit der Zulufteinlassöffnung (5) der Luftverteilbox (4) korrespondierende Zuluftausgangsöffnung des Klimageräts (1) gesetzten Adapterabschnitt (3) aufweist.

## Claims

1. Air conditioning assembly for a wagon of a rail vehicle, with an air conditioning unit (1) which can be arranged on a roof of the rail vehicle, an air distribution box (4) which is connected to a lower side of the air conditioning unit and has a feed air inlet opening (5) on its upper side, main air conditioning channels (7, 8) which emanate from the air distribution box (4) on both sides in each case in the longitudinal direction of the wagon, and a deflection device (9) which is arranged within the air distribution box (4) for the distribution of the feeder coming from the air conditioning unit (1) and the main air conditioning channels (7, 8),
a main body (10) of the deflection device (9) being configured in a wedge-shaped manner in a longitudinal section of the main air conditioning channels (7, 8), an uppermost edge of the main body of the deflection device (9) facing the feed air inlet opening (5), while base regions of the main body (10) of the deflection device (9) adjoin bottoms of the main air conditioning channels (7, 8) in terms of their height level, and the deflection device (9) being arranged within the air distribution box (4) such that it can be displaced on both sides out of a central position in the longitudinal direction of the main air conditioning channels (7, 8),
**characterized in that**
the deflection device (9) has a web (11) which extends from the uppermost edge of the main body (10) of the deflection device (9) in the direction of the feed air inlet opening (5) of the air distribution box (4).

2. Air conditioning assembly according to Claim 1,
**characterized in that**
a vertical spacing of the upper edge of the web (11) from the feed air inlet opening (5) of the air distribution box (4) is less than 10% of the vertical spacing between the bottom of the air distribution box (4) and the feed air inlet opening (5) of the air distribution box.

3. Air conditioning assembly according to Claim 1 or 2, **characterized in that**
an upper edge of the web (11) directly adjoins the feed air inlet opening (5) of the air distribution box (4).

4. Air conditioning assembly according to one of Claims 1 to 3,
**characterized in that**
the deflection device (9) is of mirror-symmetrical configuration with regard to a vertical plane which contains the uppermost edge of the main body (10) of the deflection device (9).

5. Air conditioning assembly according to one of Claims 1 to 4,
**characterized in that**
the uppermost edge of the main body (10) of the deflection device (9) lies directly above a height level of upper sides of the main air conditioning channels.

6. Air conditioning assembly according to one of Claims 1 to 5,
**characterized in that**
the air distribution box (4) has a housing portion (6) which is connected to the main air channels (7, 8) and is adapted to their height, and an adapter portion (3) which is placed between this housing portion (6) and a feed air outlet opening of the air conditioning unit (1) corresponding with the feed air inlet opening (5) of the air distribution box (4).

## Revendications

1. Système de conditionnement d'air d'une voiture d'un véhicule ferroviaire, comprenant un appareil (1) de conditionnement d'air pouvant être monté sur un toit du véhicule ferroviaire, une boîte (4) de répartition de l'air raccordée à un côté inférieur de l'appareil de conditionnement d'air et ayant, sur son côté supérieur, une ouverture (5) d'admission d'air d'admission, des conduits (7, 8) principaux de conditionnement d'air partant de la boîte (4) de répartition de l'air, de part et d'autre respectivement dans la direction longitudinale de la voiture, et un dispositif (9) de déviation, monté à l'intérieur de la boîte (4) de répartition de l'air, pour répartir l'air d'admission arrivant de l'appareil (1) de conditionnement d'air entre les conduits (7, 8) principaux de conditionnement d'air, dans lequel
un corps (10) de base du dispositif (9) de déviation est constitué en forme de coin, dans une coupe longitudinale des conduits (7, 8) principaux de conditionnement d'air, dans lequel un bord le plus haut du corps de base du dispositif (9) de déviation est tourné vers l'ouverture (5) d'admission d'air d'admission, tandis que des parties de pied du corps (10) de base du dispositif (9) de déviation se raccordent depuis leur niveau en hauteur à des fonds des conduits (7, 8) principaux de conditionnement d'air, et le dispositif (9) de déviation est monté coulissant des deux côtés, à partir d'une position médiane dans la direction longitudinale des conduits (7, 8) principaux de conditionnement d'air, à l'intérieur de la boîte (4) de répartition de l'air,
**caractérisé en ce que**
le dispositif (9) de déviation a une entretoise (11), qui s'étend du bord le plus haut du corps (10) de base du dispositif (9) de déviation en direction de l'ouverture (5) d'admission d'air d'admission de la boîte (4) de répartition de l'air.

2. Système de conditionnement d'air suivant la revendication 1,
**caractérisé en ce qu'**
une distance verticale du bord supérieur de l'entretoise (11) à l'ouverture (5) d'admission d'air d'admission de la boîte (4) de répartition de l'air représente moins de 10% de la distance verticale entre un fond de la boîte (4) de répartition de l'air et l'ouverture (5) d'admission d'air d'admission de la boîte de répartition de l'air.

3. Système de conditionnement d'air suivant la revendication 1 ou 2,
**caractérisé en ce qu'**
un bord supérieur de l'entretoise (11) est directement voisin de l'ouverture (5) d'entrée de l'air d'admission de la boîte (4) de répartition de l'air.

4. Système de conditionnement d'air suivant l'une des revendications 1 à 3,
**caractérisé en ce que**
le dispositif (9) de déviation est symétrique, comme en un miroir, par rapport à un plan vertical, qui passe par le bord le plus haut du corps (10) de base du dispositif (9) de déviation.

5. Système de conditionnement d'air suivant l'une des revendications 1 à 4,
**caractérisé en ce que**
le corps le plus haut du corps (10) de base du dispositif (9) de déviation est directement au-dessus d'un niveau haut de côté supérieur des conduits principaux de conditionnement d'air.

6. Système de conditionnement d'air suivant l'une des revendications 1 à 5,
**caractérisé en ce que**
la boîte (4) de répartition de l'air a une partie (6) d'enveloppe inférieure, raccordée aux conduits (7, 8) principaux pour de l'air et adaptée à leur niveau et une partie (3) d'adaptateur, mise entre cette partie (6) d'enveloppe et une ouverture de sortie d'air d'admission, correspondant à l'ouverture (5) d'admission d'air d'admission de la boîte (4) de répartition de l'air, de l'appareil (1) de conditionnement d'air.
